# EUROPEAN PATENT APPLICATION

(11) **EP 2 341 229 A1**
(43) Date of publication of application: **06.07.2011**
(21) Application number: 09823383.6
(22) Date of filing: 07.07.2009
(51) Int. Cl.: F02C 3/28, F01K 23/10, F02C 6/04, F02C 6/18

(54) **INTEGRATED COAL GASIFICATION COMBINED CYCLE POWER GENERATION FACILITY**

(30) Priority: 29.10.2008 JP 2008278555
(71) Applicant: Mitsubishi Heavy Industries, Ltd., Tokyo 108-8215 (JP)
(72) Inventor: TAKASE, Soken, Nagasaki-shi Nagasaki 851-0392 (JP); OTA, Katsuhiro, Tokyo 108-8215 (JP); HASHIMOTO, Takao, Tokyo 108-8215 (JP); MARUTA, Tokushi, Nagasaki-shi Nagasaki 850-8610 (JP); ISHII, Hiromi, Tokyo 108-8215 (JP)
(74) Representative: Henkel, Feiler & Hänzel
(86) International application number: PCT/JP2009/062344
(87) International publication number: WO 2010/050270

(57) **Abstract**

Provided is an integrated coal gasification combined cycle apparatus that can operate a coal pulverizer using gas turbine exhaust gas as drying gas even when the concentration of oxygen in the gas turbine exhaust gas to be used as the drying gas is temporarily increased. In the integrated coal gasification combined cycle plant using combustion exhaust gas from a gas turbine (8) as the drying gas for a coal pulverizer (1) and adjusting the temperature of the drying gas by mixing outlet gas from a denitration device (9a) installed inside an exhaust gas boiler (9) and outlet gas from the exhaust gas boiler (9), an auxiliary burner (20) is started when the concentration of oxygen in the drying gas is increased to a predetermined value or more and is installed so as to adjust the concentration of oxygen in the drying gas using the combustion exhaust gas generated thereby.

## Description

### {Technical Field}

The present invention relates to an integrated coal gasification combined cycle plant that performs combined power generation using coal as fuel.

### {Background Art}

Integrated coal gasification combined cycle (IGCC) plants that generate power by operating gas turbines by gasifying coal serving as fuel and using the driving force of the gas turbines and exhaust heat of the gas turbines are conventionally known.
In these integrated coal gasification combined cycle plants, an oxygen combustion type using oxygen as an oxidant and an air combustion type (also referred to as "air blown") using air as an oxidant are known.

Among them, in the integrated coal gasification combined cycle plant of the air combustion type using air as the oxidant, gas turbine exhaust gas (oxygen concentration: 12 vol%) is used as drying gas, and, in order to regulate the temperature, in particular, under NOx regulations, exhaust gas at the outlet of a denitration device in an exhaust gas boiler and exhaust gas at the outlet of the exhaust gas boiler are mixed. That is, the high-temperature exhaust gas introduced from the outlet of the denitration device and the relatively low-temperature exhaust gas introduced from the outlet of the exhaust gas boiler are mixed for adjusting the temperature of the drying gas, which is then used (for example, see Patent Literature 1).

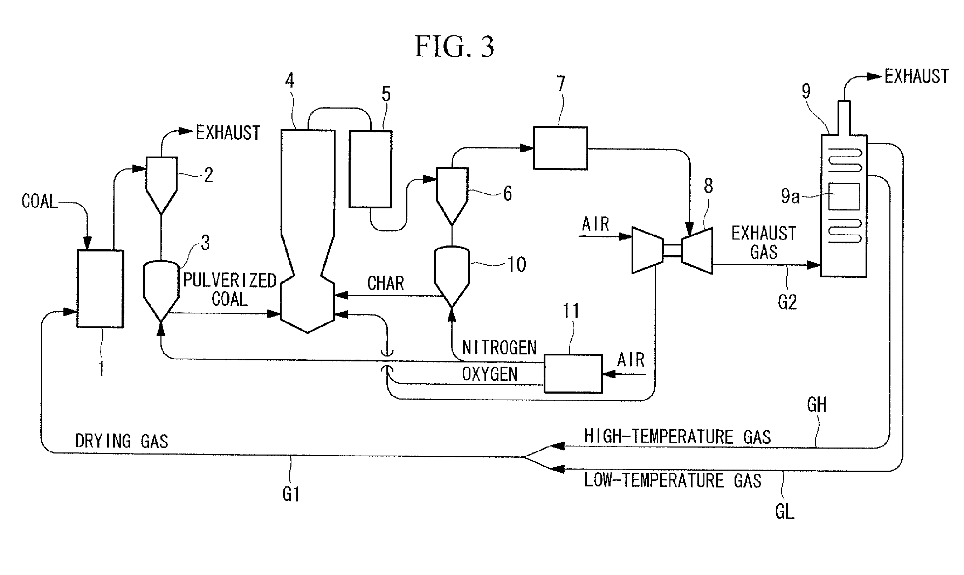

Fig. 3 is a configuration diagram showing a known example of the integrated coal gasification combined cycle plant of the air combustion type (air blown) (hereinafter, referred to as "air blown IGCC system").
In this air blown IGCC system, first, coal, which is the fuel, is introduced into a coal pulverizer 1 together with drying gas, and the coal is dry-ground to produce pulverized coal. The pulverized coal is introduced to a cyclone 2 where it is separated from exhaust and is recovered in a hopper 3. Subsequently, the pulverized coal in the hopper 3 is transferred to a gasification furnace 4 by pressurized transferring nitrogen gas supplied from an air-separating device 11 described below and is gasified. The coal gas thus-gasified in the gasification furnace 4 is supplied to a char-recovering device 6 through a gas cooler 5. Incidentally, when the pulverized coal is gasified in the gasification furnace 4, compressed air supplied from a gas turbine 8 described below and oxygen supplied from the air-separating device 11 are used as oxidants.

In the char-recovering device 6, the char generated together with the coal gas, which is a gasified pulverized coal, is separated from the coal gas. On the other hand, the coal gas is purified through a gas purification device 7 and is then used as fuel gas for the gas turbine 8. This fuel gas (coal gas) is supplied to a combustor of the gas turbine 8 where it is burnt to generate high-temperature, high-pressure combustion exhaust gas. This combustion exhaust gas drives a turbine of the gas turbine 8 and is then discharged as exhaust gas. Incidentally, the main shaft of the gas turbine 8 is connected to a power generator (not shown), and power is generated by driving the power generator.

The high-temperature exhaust gas discharged from the gas turbine 8 is supplied to an exhaust gas boiler 9 and is used for generating steam. The steam generated in the exhaust gas boiler 9 is supplied to, for example, a steam turbine power generator (not shown).
The exhaust gas used for generating steam in the exhaust gas boiler 9 is subjected to necessary treatment by, for example, a denitration device 9a and is then exhausted to the atmosphere. Furthermore, part of the exhaust gas denitrated through the denitration device 9a is supplied to the coal pulverizer 1 as drying gas. In the configuration example shown in the drawing, relatively-high-temperature exhaust gas introduced from the outlet of the denitration device 9a and relatively-low-temperature exhaust gas introduced from the outlet of the exhaust gas boiler 9 are mixed, and drying gas after being adjusted to a desired drying-gas-temperature is used.

### {Citation List}

### {Patent Literature}

{PTL 1} Japanese Unexamined Patent Application, Publication No. Sho 61-175241

### {Summary of Invention}

### {Technical Problem}

Meanwhile, in the above-described known integrated coal gasification combined cycle plant (air blown IGCC system), when the pulverized coal is produced using low-grade coal that is usually highly pyrophoric, such as subbituminous coal and lignite, as raw material coal, spontaneous combustion is prevented by controlling the concentration of oxygen in the drying gas to the specified value (for example, 13 vol%) or less.
That is, in the known air blown IGCC system, for example, the gas turbine exhaust gas having an oxygen concentration of 12 vol% is used as the drying gas, and, in order to regulate the temperature, in particular, under NOx regulations, the outlet exhaust gas (high-temperature gas) of the denitration device in the exhaust gas boiler and the outlet exhaust gas (low-temperature gas) of the exhaust gas boiler are mixed.

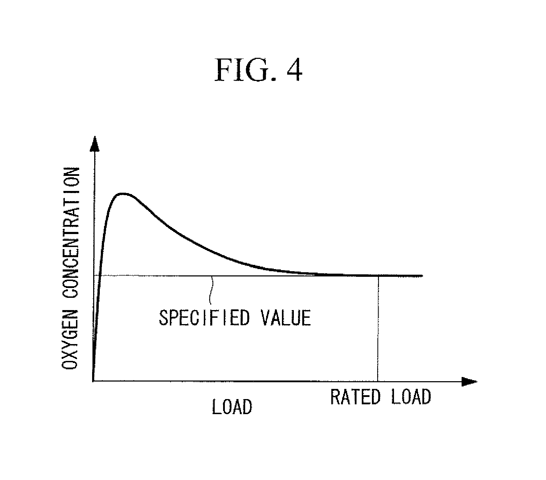

However, in the air blown IGCC system, for example, as shown in Fig. 4, the concentration of oxygen in the gas turbine exhaust gas to be used as the drying gas is temporarily increased to a level higher than the specified value at, for example, the start-up time at which the load becomes lower than the rated load. Consequently, it may not be possible to control the concentration of oxygen in the drying gas to 13 vol% or less, which is required for preventing spontaneous combustion of the pulverized coal. Accordingly, there has been a problem that the operation of the coal pulverizer must be stopped to prevent spontaneous combustion of the pulverized coal.
The increase in the concentration of oxygen when the load is low is caused by the fact that, since the gas turbine has limitations on the amount of air to be used, the amount of air becomes constant when the load is lower than a certain value. Here, the limitations on the gas turbine side include the metal temperature and combustion vibration around the combustor.

Thus, in the above-described known air blown IGCC system, since the concentration of oxygen in the drying gas cannot be controlled to the specified value or less during operation at a low load such as at the start-up time, the operation of the coal pulverizer is restricted from the viewpoint of preventing spontaneous combustion of the pulverized coal.
The present invention has been made in view of the above circumstances, and an object thereof is to provide an integrated coal gasification combined cycle apparatus that can operate a coal pulverizer using gas turbine exhaust gas as drying gas even when the concentration of oxygen in the gas turbine exhaust gas to be used as the drying gas is temporarily increased as in, for example, operation at a low load.

### {Solution to Problem}

The present invention employs the following solutions for solving the above-mentioned problem.
The integrated coal gasification combined cycle plant according to an aspect of the present invention is an integrated coal gasification combined cycle plant in which the combustion exhaust gas from a gas turbine is used as drying gas for a coal pulverizer, and the temperature of the drying gas is regulated by mixing outlet gas from a denitration device installed in an exhaust gas boiler and outlet gas from the exhaust gas boiler, wherein the plant includes an auxiliary burner that is started when the concentration of oxygen in the drying gas is increased to a predetermined value or more and is installed so as to adjust the concentration of oxygen in the drying gas using the combustion exhaust gas generated thereby.

According to such an integrated coal gasification combined cycle plant, since the plant has the auxiliary burner that is started when the concentration of oxygen in the drying gas is increased to a predetermined value or more and is installed so as to adjust the concentration of oxygen in the drying gas using the combustion exhaust gas generated thereby, even when the concentration of oxygen in the gas turbine exhaust gas is increased, for example, when the load is low, the concentration of oxygen in the drying gas can be adjusted to a specified value or less according to the amount of the combustion exhaust gas generated by the auxiliary burner. By doing so, even when the concentration of oxygen in the gas turbine exhaust gas is increased, the coal pulverizer can be operated by being supplied with drying gas controlled to the specified oxygen concentration or less.

In the above aspect, the auxiliary burner is preferably installed inside the exhaust gas boiler. By doing so, the recovery heat of the exhaust gas boiler is increased, resulting in an increase in the output.

In the above aspect, the auxiliary burner is preferably installed in a drying gas flow path for supplying the drying gas to the coal pulverizer. By doing so, since the concentration of oxygen in the drying gas can be adjusted by regulating only the gas turbine exhaust gas extracted from the exhaust gas boiler, the fuel consumed by the auxiliary burner can be reduced. That is, merely by adjusting the concentration of oxygen in the gas turbine exhaust gas to be used as the drying gas, the amount of the combustion exhaust gas generated by the auxiliary burner can be made small. In this case, the temperature of the drying gas is preferably adjusted after that the concentration of oxygen has been regulated by the auxiliary burner.

In the integrated coal gasification combined cycle plant including the auxiliary burner installed inside the exhaust gas boiler or the integrated coal gasification combined cycle plant including the auxiliary burner installed in the drying gas flow path for supplying the drying gas to the coal pulverizer, the concentration of oxygen in the exhaust gas is preferably measured by an oxygen concentration detector installed in the drying gas flow path and near the inlet to the coal pulverizer. By doing so, the concentration of oxygen in the drying gas can be precisely determined and can be reliably controlled.

In the integrated coal gasification combined cycle plant including the auxiliary burner installed inside the exhaust gas boiler or the integrated coal gasification combined cycle plant in which the concentration of oxygen in the exhaust gas is measured by the oxygen concentration detector installed in the drying gas flow path and near the inlet to the coal pulverizer, the plant is preferably provided with a combustion exhaust gas bypass flow path that is branched from a combustion exhaust gas flow path connecting between the gas turbine and the exhaust gas boiler and that joins the drying gas flow path and a flow-rate-adjusting valve capable of regulating the degree of opening thereof in the combustion exhaust gas bypass flow path. By doing so, when the combustion level of the auxiliary burner causes a variation in pressure, the concentration of oxygen in the drying gas can be controlled by adjusting the degree of opening of the flow-rate-adjusting valve.

### {Advantageous Effects of Invention}

According to the present invention described above, when the concentration of oxygen in the gas turbine exhaust gas to be used as the drying gas is temporarily increased as in, for example, operation at a low load, the concentration of oxygen is regulated by mixing the combustion exhaust gas generated by the auxiliary burner, which allows the gas turbine exhaust gas regulated to a specified oxygen concentration or less to be used as the drying gas for the coal pulverizer. As a result, the integrated coal gasification combined cycle apparatus can ensure drying gas for the coal pulverizer so as to allow the coal pulverizer to be operated even during operation at a low load, such as at the start-up time.

### {Brief Description of Drawings}

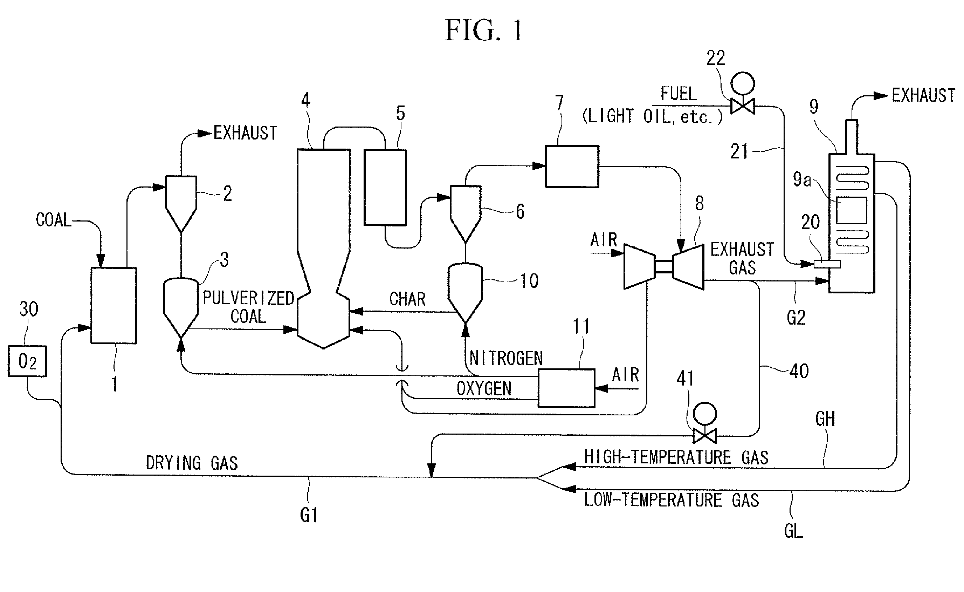

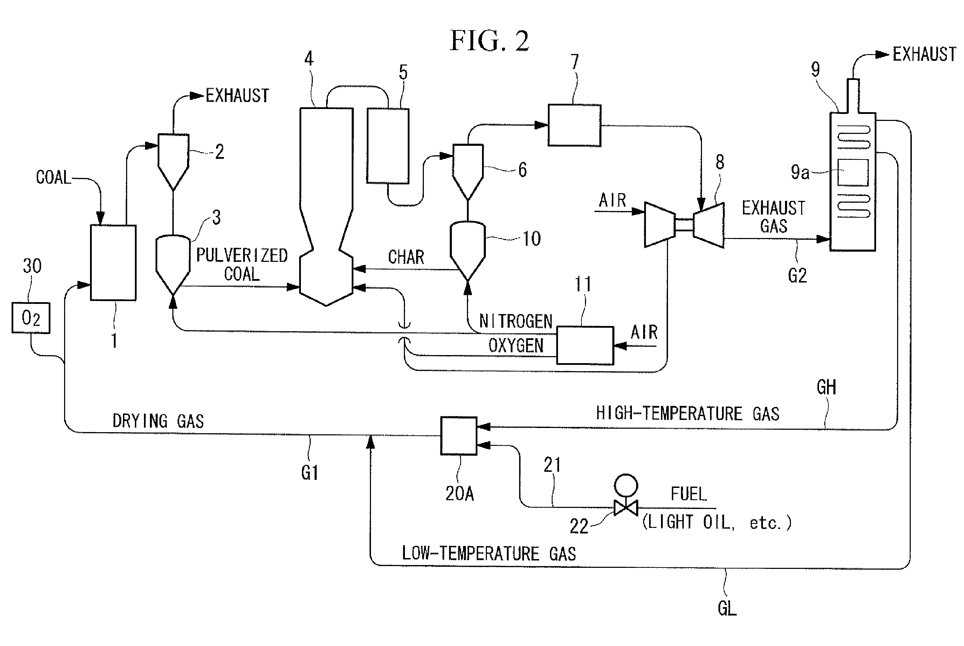

{Fig. 1} Fig. 1 is a configuration diagram showing an embodiment of the integrated coal gasification combined cycle plant according to the present invention.
{Fig. 2} Fig. 2 is a configuration diagram showing a modification of the integrated coal gasification combined cycle plant shown in Fig. 1.
{Fig. 3} Fig. 3 is a configuration diagram showing a known example of an integrated coal gasification combined cycle plant.
{Fig. 4} Fig. 4 is a graph showing the relationship between load (horizontal axis) and concentration of oxygen contained in exhaust gas (vertical axis) in combustion exhaust gas from a gas turbine.

### {Description of Embodiments}

Embodiments of the integrated coal gasification combined cycle plant according to the present invention will be described below based on the drawings.
The integrated coal gasification combined cycle plant of the embodiment shown in Fig. 1 employs an air combustion system generating coal gas with a gasification furnace 4 using air as an oxidant and supplies the coal gas, after being purified by a gas purification device 7, to a gas turbine 8 as fuel gas. That is, the integrated coal gasification combined cycle plant shown in Fig. 1 is an integrated coal gasification combined cycle plant of the air combustion type (air blown) (hereinafter, referred to as "air blown IGCC system").

The air blown IGCC system introduces part of the exhaust gas that has performed work at the gas turbine 8 or an exhaust gas boiler 9 described below as drying gas and supplies coal, which is the raw material, to a coal pulverizer 1 together with the drying gas. In the coal pulverizer 1, the coal supplied by the drying gas is heated and pulverized into fine particles, while moisture in the coal is removed therefrom, to produce pulverized coal.
The thus-produced pulverized coal is transferred to a cyclone 2 by the drying gas. Inside the cyclone 2, gas components such as the drying gas are separated from the pulverized coal (particle component), and the gas components are exhausted from a hopper 3. On the other hand, the pulverized coal, which is the particle component, is recovered in the hopper 3 by falling due to the force of gravity.

The pulverized coal recovered in the hopper 3 is transferred to the gasification furnace 4 by nitrogen gas (transferring gas) introduced as a pressurized transferring gas from an air-separating device 11 described below.
The pulverized coal, serving as raw material of the coal gas, and char described below are supplied to the gasification furnace 4. In the gasification furnace 4, the coal gas is produced by gasifying the pulverized coal and the char using compressed air supplied from the gas turbine 8 and oxygen supplied from the air-separating device 11 as oxidants.
The coal gas thus-gasified in the gasification furnace 4 is introduced to a gas cooler 5 from the upper portion of the gasification furnace 4 and is cooled. The coal gas is cooled in the gas cooler 5 and is then supplied to a char-recovering device 6.

In the char-recovering device 6, the char generated together with the coal gas, which is a gasified pulverized coal, is separated from the coal gas. On the other hand, the coal gas flows out from the upper portion of the char-recovering device 6 and is supplied to the gas turbine 8 through the gas purification device 7.
In the gas purification device 7, the coal gas is purified to produce fuel gas for the gas turbine 8.

The thus-produced fuel gas (coal gas) is supplied to a combustor of the gas turbine 8 and is burnt to generate high-temperature, high-pressure combustion exhaust gas.
This combustion exhaust gas drives the turbine of the gas turbine 8 and is then discharged as high-temperature exhaust gas. Since the main shaft that rotates together with the turbine is connected to a gas turbine power generator (not shown), the thus-driven gas turbine 8 can drive the gas turbine power generator to generate power.

The high-temperature exhaust gas discharged from the gas turbine 8 is supplied to the exhaust gas boiler 9 and is used as a heat source for generating steam. Meanwhile, the exhaust gas used for generating steam in the exhaust gas boiler 9 is subjected to necessary treatment by, for example, a denitration device 9a and is then exhausted into the atmosphere.
In addition, part of the exhaust gas used for generating steam in the exhaust gas boiler 9 is extracted as the drying gas for the coal pulverizer 1. As this drying gas, the exhaust gas subjected to treatment such as denitration is used. Specifically, in the above-mentioned drying gas, the exhaust gas from the exhaust gas boiler 9 is regulated to a desired temperature by properly mixing the outlet gas (high-temperature gas) from the denitration device 9a, which has a relatively high temperature, and the outlet gas (low-temperature gas) from the exhaust gas boiler 9, which has a temperature lower than that of the outlet gas from the denitration device 9a.

The drying gas having its temperature regulated in this way is supplied to the coal pulverizer 1 through a drying gas flow path G1. This drying gas flow path G1 is a gas flow path for the temperature-regulated drying gas, starting from a point where a high-temperature gas flow path GH in which the outlet gas from the denitration device 9a is introduced and flows is merged with a low-temperature gas flow path GL in which the outlet gas from the exhaust gas boiler 9 is introduced and flows, and reaching the coal pulverizer 1.
Meanwhile, the steam generated in the exhaust gas boiler 9 is supplied to, for example, a steam turbine (not shown) for power generation.

The char recovered by the above-mentioned char-recovering device 6 is recovered in a hopper 10 by falling due to the force of gravity. The char in the hopper 10 is returned to the gasification furnace 4 using nitrogen supplied from the air-separating device 11 as transferring gas, thus being transferred by this nitrogen. The char returned to the gasification furnace 4 is used as a raw material for gasification together with the pulverized coal.
Thus, coal gas and char are generated by gasifying the pulverized coal, obtained by pulverizing coal, in the gasification furnace 4 where air and oxygen are used as oxidants. The coal gas is used as fuel gas for the gas turbine 8, and the char separated from the coal gas is supplied to the gasification furnace 4 again and is gasified.

Thus, in the air blown IGCC system using the combustion exhaust gas from the gas turbine 8 as the drying gas for the coal pulverizer 1 and regulating the temperature of the drying gas by mixing the outlet gas from the denitration device 9a installed in the exhaust gas boiler 9 and the outlet gas from the exhaust gas boiler 9, an auxiliary burner 20 that is started up when the concentration of oxygen in the drying gas is increased to a predetermined value (for example, 12 vol%) or more is provided. This auxiliary burner 20 is installed so as to adjust the concentration of oxygen in the drying gas by using the combustion exhaust gas generated by burning fuel such as light oil.

The auxiliary burner 20 shown in the drawing is installed inside the exhaust gas boiler 9. That is, the auxiliary burner 20 is disposed so as to approximately correspond with the position at which the exhaust gas is introduced into the exhaust gas boiler 9 from the gas turbine 8, so that the exhaust gas and the combustion exhaust gas are combined and flow upward in the exhaust gas boiler 9. As a result, though the concentration of oxygen varies depending on the amount of the combustion exhaust gas combined and mixed with the exhaust gas when the auxiliary burner 20 is started up, it is possible to adjust the concentration of oxygen in the exhaust gas to be used as the drying gas.

Specifically, when the concentration of oxygen in the drying gas is increased to a predetermined value or more, a flow-rate control valve 22 disposed in a fuel-supply line 21 supplying fuel to the auxiliary burner 20 is fully opened from a fully-closed state so that fuel is supplied to the auxiliary burner 20 and is burnt. On this occasion, the amount of combustion exhaust gas generated by the auxiliary burner 20 and discharged into the exhaust gas boiler 9 can be varied by changing the amount of fuel supplied to the auxiliary burner 20 by adjusting the degree of opening of the flow-rate control valve 22. Therefore, by adjusting the degree of opening of the flow-rate control valve 22, the concentration of oxygen in the exhaust gas becoming the drying gas can be varied according to the amount of the combustion exhaust gas to be mixed with the exhaust gas.
Furthermore, since the combustion exhaust gas generated by the auxiliary burner 20 is merged with the exhaust gas and flows together therewith upward in the exhaust gas boiler 9, the heat of the combustion exhaust gas can also be recovered by the exhaust gas boiler 9. Therefore, the auxiliary burner 20 installed inside the exhaust gas boiler 9 can increase the amount of heat recovered by the exhaust gas boiler 9 during driving of the auxiliary burner 20, resulting in an increase in the output of, for example, a steam turbine.

Incidentally, since the concentration of oxygen in the exhaust gas to be used as the drying gas is increased when the load is low, for example, at the start-up time of the gas turbine 8, the concentration may become a value higher than the specified value (13 vol%) in excess of a predetermined value (for example, 12 vol%). This concentration of oxygen in the drying gas is measured by an oxygen concentration sensor 30 provided as an oxygen concentration detector at an appropriate position in the drying gas flow path G1. It is desirable to install this oxygen concentration sensor 30 near the inlet of the coal pulverizer 1 in order to precisely determine the concentration of oxygen in the drying gas supplied to the coal pulverizer 1.

The concentration of oxygen measured by the oxygen concentration sensor 30 is input to a controller (not shown). The measured value of the concentration of oxygen input to the controller is used for starting the auxiliary burner 20 and controlling the degree of opening of the flow-rate control valve 22.
That is, the oxygen concentration sensor 30 measures the concentration of oxygen in the drying gas to be supplied to the coal pulverizer 1; and when an oxygen concentration higher than a predetermined value is detected, the auxiliary burner 20 is started to generate combustion exhaust gas. As a result, since the combustion exhaust gas mixed with the exhaust gas decreases the concentration of oxygen according to the mixed amount, the degree of opening of the flow-rate control valve 22 is subsequently controlled according to the concentration of oxygen detected by the oxygen concentration sensor 30 to perform feedback control for producing the combustion exhaust gas so that the concentration of oxygen in the drying gas becomes a predetermined value lower than the specified value.

By such control, the concentration of oxygen in the drying gas can be precisely ascertained and can be reliably controlled so as not to supply the coal pulverizer 1 with drying gas containing oxygen at a concentration higher than the specified value. Furthermore, when the concentration of oxygen in the exhaust gas introduced from the gas turbine 8 is reduced to a level near the specified value by, for example, the gas turbine 8 approaching the rated driving level, the feedback control using the measured value of the oxygen concentration sensor 30 gradually decreases the degree of opening of the flow-rate control valve 22 to reduce the amount of fuel to be supplied and eventually closes the valve 22 completely to stop the operation of the auxiliary burner 20. That is, the flow-rate control valve 22 is completely closed when it is determined that the concentration of oxygen can be maintained at a predetermined value even if the combustion exhaust gas is not mixed, and also the operation of the auxiliary burner 20 is stopped.

Therefore, even in the operation where the concentration of oxygen in the gas turbine exhaust gas is increased due to, for example, a low load, the concentration of oxygen in the drying gas can be adjusted to within the specified value according to the amount of the combustion exhaust gas generated by the auxiliary burner 20. Accordingly, even if the concentration of oxygen in the exhaust gas discharged from the gas turbine 8 is temporarily increased, for example, at start-up time, this exhaust gas can be stably supplied as drying gas controlled to a predetermined oxygen concentration, and the coal pulverizer 1 can be continuously operated without being stopped.

When the inner pressure of the exhaust gas boiler 9 is varied depending on the combustion level of the auxiliary burner 20, it is desirable to provide a combustion exhaust gas bypass flow path 40, which is branched from the combustion exhaust gas flow path G2 connecting between the gas turbine 8 and the exhaust gas boiler 9 and which joins the drying gas flow path G1, and an exhaust gas flow-rate-adjusting valve 41, capable of adjusting the degree of opening thereof, in the combustion exhaust gas bypass flow path 40.
By employing such a configuration, the concentration of oxygen in the drying gas can be controlled by adjusting the degree of opening of the exhaust gas flow-rate-adjusting valve 41, while the degree of opening of the flow-rate control valve 22 controlling the amount of fuel supplied to the auxiliary burner 20 is maintained constant. That is, the concentration of oxygen in the drying gas is controlled toward raising the concentration of oxygen, which has already been decreased, by changing the amount of bypass exhaust gas containing oxygen in a high concentration, which is used as the drying gas by being branched from the upstream side of the exhaust gas boiler 9, by adjusting the degree of opening of the exhaust gas flow-rate-adjusting valve 41, not by variably controlling the amount of the combustion exhaust gas, which causes pressure variation.

In this control method, oxygen is controlled to a desired concentration by setting the auxiliary burner 20 to generate a larger amount of the combustion exhaust gas and raising the concentration of oxygen reduced by mixing bypass exhaust gas with the combustion exhaust gas to a level lower than a predetermined value by adjusting the mixing ratio of the bypass exhaust gas in its high oxygen concentration state before mixing it with the combustion exhaust gas. Note that, in such a configuration, a dedicated on-off valve for opening and closing operation may be installed instead of the flow-rate control valve 22.

Next, a modification of the above-described air blown IGCC system will be described based on Fig. 2. The portions same as those in the above-described embodiments are designated with the same reference numerals, and detailed descriptions thereof are omitted.
In the air blown IGCC system shown in the drawing, the placement of the auxiliary burner 20A is different. That is, the auxiliary burner 20A is installed in the drying gas flow path G1 supplying, to the coal pulverizer 1, the drying gas whose temperature is regulated by mixing a high-temperature gas and a low-temperature gas, instead of inside the exhaust gas boiler 9. In the configuration example shown in the drawing, in order to facilitate the temperature adjustment of the drying gas, the auxiliary burner 20A is installed on the upstream side (the exhaust gas boiler 9 side) of the position where the temperature is adjusted by mixing the low-temperature gas. As a result, the drying gas to be fed to the coal pulverizer 1 is prepared by adjusting the concentration of oxygen in the high-temperature gas introduced from the exhaust gas boiler 9 with the auxiliary burner 20A and then adjusting the temperature by mixing the low-temperature gas.

By employing such a configuration, when the concentration of oxygen in the drying gas is adjusted by starting the auxiliary burner 20A, the target is only the exhaust gas to be actually used as the drying gas. That is, since the drying gas before temperature adjustment is that extracted from the exhaust gas boiler 9 in an amount actually used as the drying gas, the amount is small compared to the total amount of the exhaust gas flowing in the exhaust gas boiler 9.
Consequently, the amount of the combustion exhaust gas necessary for reducing and adjusting the concentration of oxygen in the drying gas may also be small, which allows a reduction in size of the auxiliary burner 20A installed in the drying gas flow path G1 and also a decrease in fuel consumption of the auxiliary burner 20A. In other words, in the auxiliary burner 20A of the modification, merely by adjusting only the oxygen concentration in the gas turbine exhaust gas being actually used as the drying gas, the fuel consumption is reduced compared to that in the auxiliary burner 20, which also simultaneously adjusts the concentration of oxygen in the exhaust gas to be exhausted into the air, resulting in a reduction in running costs.

Thus, according to the present invention described above, the drying gas (gas turbine exhaust gas) can be regulated toward decreasing the concentration of oxygen by mixing the combustion exhaust gas generated by starting the auxiliary burner 20 or 20A even when the concentration of oxygen in the gas turbine exhaust gas to be used as the drying gas is temporarily increased, for example, during operation at a low load. Therefore, the gas turbine exhaust gas regulated to a specified oxygen concentration or less can be used as the drying gas for the coal pulverizer 1 even at, for example, the start-up time at which the concentration of oxygen is increased. As a result, the integrated coal gasification combined cycle apparatus of the present invention ensures the drying gas for the coal pulverizer 1 even during operation at a low load, such as start-up time, and enables stable operation of the coal pulverizer 1.

Therefore, in the above-described integrated coal gasification combined cycle apparatus of the present invention, the auxiliary boiler 20 or 20A is installed at a suitable position for generating the combustion exhaust gas as a gas for adjusting the concentration of oxygen in the gas turbine exhaust gas to be used as the drying gas for the coal pulverizer 1 (also capable of drying coal containing a large amount of moisture), that is, as a gas for adjusting the concentration of oxygen by being mixed with the gas turbine exhaust gas to reduce the concentration of oxygen to the specified value or less for preventing spontaneous combustion of the pulverized coal.
The present invention is not limited to the above-described embodiments and can be suitably modified within a range that does not depart from the spirit of the present invention.

### {Reference Signs List}

- 1: coal pulverizer
- 2: cyclone
- 3, 10: hopper
- 4: gasification furnace
- 5: gas cooler
- 6: char-recovering device
- 7: gas purification device
- 8: gas turbine
- 9: exhaust gas boiler
- 9a: denitration device
- 11: air-separating device
- 20, 20A: auxiliary burner
- 22: flow-rate control valve
- 30: oxygen concentration sensor
- 40: combustion exhaust gas bypass flow path
- 41: exhaust gas flow-rate-adjusting valve
- G1: drying gas flow path
- G2: combustion exhaust gas flow path

## Claims

1. An integrated coal gasification combined cycle plant in which a combustion exhaust gas from a gas turbine is used as drying gas for a coal pulverizer, and the temperature of the drying gas is adjusted by mixing outlet gas from a denitration device installed in an exhaust gas boiler and outlet gas from the exhaust gas boiler, the integrated coal gasification combined cycle plant comprising:
an auxiliary burner that is started when the concentration of oxygen in the drying gas is increased to a predetermined value or more and is installed so as to adjust the concentration of oxygen in the drying gas using the combustion exhaust gas generated thereby.

2. The integrated coal gasification combined cycle plant according to Claim 1, wherein the auxiliary burner is installed inside the exhaust gas boiler.

3. The integrated coal gasification combined cycle plant according to Claim 1, wherein the auxiliary burner is installed in a drying gas flow path for supplying the drying gas to the coal pulverizer.

4. The integrated coal gasification combined cycle plant according to Claim 2 or 3, wherein the concentration of oxygen in the exhaust gas is measured by an oxygen concentration detector installed in the drying gas flow path and near the inlet to the coal pulverizer.

5. The integrated coal gasification combined cycle plant according to Claim 2 or 4, further comprising a combustion exhaust gas bypass flow path that is branched from a combustion exhaust gas flow path connecting between the gas turbine and the exhaust gas boiler and that joins the drying gas flow path, and a flow-rate-adjusting valve capable of regulating the degree of opening thereof in the combustion exhaust gas bypass flow path.
